# EUROPÄISCHE PATENTANMELDUNG

(11) **EP 2 775 667 A2**
(43) Veröffentlichungstag der Anmeldung: **10.09.2014**
(21) Anmeldenummer: 14000360.9
(22) Anmeldetag: 31.01.2014
(51) Int. Cl.: H04L 12/28

(54) **Modulares multi-energiemanagement-gateway**

(30) Priorität: 08.03.2013 DE 102013003971
(71) Anmelder: ABB AG, 68309 Mannheim (DE)
(72) Erfinder: Lehnert, Christian, 58239 Schwerte (DE); Hansen, Ewa, 72223 Västerâs (SE); Rossebo, Judith E. Y., 0852 Oslo (NO); Klett, Martin, 44267 Dortmund (DE); Stoll, Pia, 72346 Västerâs (SE); Lennvall, Tomas, 72221 Västerâs (SE); Rizvanovic, Larisa, 72471 Västeras (SE)

(57) **Zusammenfassung**

Es wird ein modulares Multi-Energiemanagement-Gateway (1, 2) vorgeschlagen, welches folgende Module umfasst
• mindestens ein Base-Unit-Modul (4), welches einen ersten Anschluss (5), einen zweiten Anschluss (6) und eine interne Recheneinheit (7) aufweist,
• mindestens zwei Kommunikationsmodule (13, 18, 23, 28, 33), welche jeweils einen ersten Anschluss (14, 19, 24, 29, 34), einen zweiten Anschluss (15, 20, 25, 30, 35) und eine zwischen beiden Anschlüssen angeordnete interne Recheneinheit (11, 16, 21, 26, 31, 36) aufweisen,
• wobei am ersten Anschluss (14, 19, 24, 29, 34) eines jeden Kommunikationsmoduls (13, 18, 23, 28, 33) und des mindestens einen Base-Unit-Moduls (4) ein externer Kommunikationskanal (44, 47, 50, 53, 56, 59) mit einem bestimmten Kommunikationsprotokoll zum Anschluss eines externen Kommunikationsteilnehmers (40, 41, 43, 46, 49, 52, 55) gebildet ist und
• wobei die Kommunikationsmodule (13, 18, 23, 28, 33) und das mindestens eine Base-Unit-Modul (4) über ihre zweiten Anschlüsse (6, 15, 20, 25, 30, 35) unter Verwendung eines Gateway-internen Kommunikationskanals mit einem übergeordnetem Kommunikationsprotokoll jeweils miteinander und untereinander kommunizieren, wodurch eine Kommunikation der externen Kommunikationsteilnehmer (40, 41, 43, 46, 49, 52, 55) untereinander / miteinander über das Multi-Energiemanagement-Gateway (1, 2) ermöglicht ist.

## Beschreibung

Die Erfindung betrifft ein modulares Multi-Energiemanagement-Gateway.

Der Energieverbrauch in privaten Häusern und privaten Gebäuden nimmt einen relativ großen Anteil im Vergleich zum Gesamt-Energieverbrauch ein. Für Industrieanlagen und bei Heizsystemen mit Stromeinspeisung ist die Laststeuerung durch Energieversorgungsunternehmen seit mehreren Jahrzehnten Stand der Technik. Soll diese Technologie auf den privaten (Wohn-)Bereich übertragen werden, so stellen die für diesen Bereich existierenden unterschiedlichen Kommunikationsprotokolle eine zusätzliche Erschwernis dar.

Der Erfindung liegt die Aufgabe zugrunde, ein optimiertes modulares Multi-Energiemanagement-Gateway anzugeben.

Diese Aufgabe wird erfindungsgemäß dadurch gelöst durch ein modulares Multi-Energiemanagement-Gateway, welches folgende Module umfasst
- mindestens ein Base-Unit-Modul, welches einen ersten Anschluss, einen zweiten Anschluss und eine interne Recheneinheit aufweist,
- mindestens zwei Kommunikationsmodule, welche jeweils einen ersten Anschluss, einen zweiten Anschluss und eine zwischen beiden Anschlüssen angeordnete interne Recheneinheit aufweisen,
- wobei am ersten Anschluss eines jeden Kommunikationsmoduls und des mindestens einen Base-Unit-Moduls ein externer Kommunikationskanal mit einem bestimmten Kommunikationsprotokoll zum Anschluss eines externen Kommunikationsteilnehmers gebildet ist und
- wobei die Kommunikationsmodule und das mindestens eine Base-Unit-Modul über ihre zweiten Anschlüsse unter Verwendung eines Gateway-internen Kommunikationskanals mit einem übergeordnetem Kommunikationsprotokoll jeweils miteinander und untereinander kommunizieren, wodurch eine Kommunikation der externen Kommunikationsteilnehmer untereinander / miteinander über das Multi-Energiemanagement-Gateway ermöglicht ist.

Die mit der Erfindung erzielbaren Vorteile liegen insbesondere darin, dass Kommunikationsmodule mit unterschiedlichen Kommunikationsmedien und Kommunikationsprotokollen und damit auch die daran angeschlossenen externen Kommunikationsteilnehmer über einen einheitlichen Gateway-internen Kommunikationskanal untereinander / miteinander kommunizieren können. Das vorgeschlagene modulare Multi-Energiemanagement-Gateway bietet dem Anwender eine große Flexibilität im Hinblick auf den privaten (Wohn-)Bereich betreffende unterschiedliche Kommunikationsprotokolle, d. h. die unterschiedlichen Arten der Kommunikationsprotokolle des privaten (Wohn-)Bereichs werden unterstützt. Die Anwendung eines bestimmten Kommunikationsprotokolls kann im Laufe der Zeit einem Wechsel unterliegen. Des Weiteren können in der Zukunft neue Kommunikationsprotokolle geschaffen werden. Das vorgeschlagene modulare Multi-Energiemanagement-Gateway ist offen für einen derartigen Wechsel der Kommunikationsprotokolle respektive unterstützt einen derartigen Wechsel.

Die Erfindung betrifft weiterhin ein System mit dem modularen Multi-Energiemanagement-Gateway, bei dem einzelne Kommunikationsmodule in Zusammenspiel mit der Basiseinheit in beliebiger Art und Weise so aneinanderreihbar bzw. miteinander verbindbar sind, dass weitere Kommunikationsprotokolle und weitere Systeme mit jeweils einem weiteren Modul oder mehreren Modulen in das System einbindbar sind.

Vorteilhaft kann beim modularen Multi-Energiemanagement-Gateway eine Erweiterung mit einem zweiten Base-Unit-Modul erfolgen, welches einen ersten Anschluss, einen zweiten Anschluss und eine interne Recheneinheit aufweist. Hierdurch wird die Skalierbarkeit eines das modulare Multi-Energiemanagement-Gateway enthaltenden Systems gesteigert.

Der Gateway-interne Kommunikationskanal mit übergeordnetem Kommunikationsprotokoll kann in Form von / des EEBUS ausgebildet sein.

Ein externer Kommunikationskanal kann in Form von / des
- ZigBee
- KNX-TP
- Modbus
- ZWave
- KNX-PL
- Internet
ausgebildet sein, wobei dies Auflistung selbstverständlich keine abschließende Betrachtung darstellt.

Die mit der Erfindung erzielbaren Vorteile beruhen weiterhin darauf, dass mit dem das modulare Multi-Energiemanagement-Gateway enthaltenden Systems, die einzelnen Kommunikationsmodule in Zusammenspiel mit der Basiseinheit in beliebiger Art und Weise aneinandergereiht werden können, um somit den unterschiedlichen Anforderungen und den zukünftigen Anwendungen gerecht zu werden. Diese Anwendungen beruhen unter anderem darauf, dass weitere Kommunikationsprotokolle und Systeme mit jeweils einem weiteren Modul oder mehreren Modulen einbindbar sind, sowie auch weitere Anwendungen, wie beispielsweise Überwachungen des Energieverbrauches, Lastabwurf, mobile Endgeräteunterstützung/Web-Dienste, durch Hinzufügen von einem oder mehreren Modulen in das System unterstützt werden.

Die Erfindung wird nachstehend an Hand der in der Zeichnung dargestellten Ausführungsbeispiele erläutert. Es zeigen:
- Fig. 1: ein erstes Ausführungsbeispiel eines modularen Multi-Energiemanagement-Gateways mit einem Base-Unit-Modul und mit mehreren Kommunikations-Modulen,
- Fig. 2: ein zweites Ausführungsbeispiel eines modularen Multi-Energiemanagement-Gateways mit zwei Base-Unit-Modulen und mit mehreren Kommunikations-Modulen.

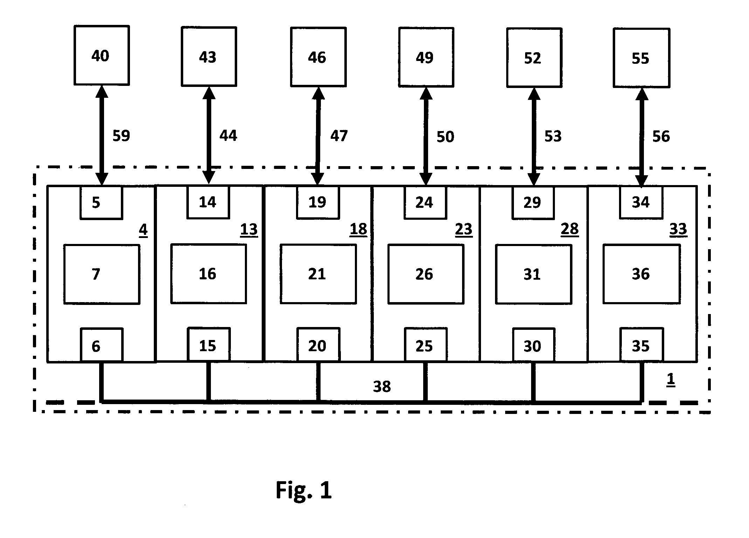

In Fig. 1 ist ein erstes Ausführungsbeispiel eines modularen Multi-Energiemanage-ment-Gateways mit einem Base-Unit-Modul und mit mehreren Kommunikations-Modulen dargestellt. Das Multi-Energiemanagement-Gateway 1 weist die folgenden Baukomponenten auf:
   - ein Base-Unit-Modul 4, welches einen ersten Anschluss 5, einen zweiten Anschluss 6 und eine interne Recheneinheit 7 besitzt,
   - ein erstes Kommunikations-Modul 13, welches einen ersten Anschluss 14, einen zweiten Anschluss 15 und eine interne Recheneinheit 16 besitzt,
   - ein zweites Kommunikations-Modul 18, welches einen ersten Anschluss 19, einen zweiten Anschluss 20 und eine interne Recheneinheit 21 besitzt,
   - ein drittes Kommunikations-Modul 23, welches einen ersten Anschluss 24, einen zweiten Anschluss 25 und eine interne Recheneinheit 26 besitzt,
   - ein viertes Kommunikations-Modul 28, welches einen ersten Anschluss 29, einen zweiten Anschluss 30 und eine interne Recheneinheit 31 besitzt,
   - ein fünftes Kommunikations-Modul 33, welches einen ersten Anschluss 34, einen zweiten Anschluss 35 und eine interne Recheneinheit 36 besitzt.

Die ersten Anschlüsse 5, 14, 19, 24, 29, 34 bilden gleichzeitig die externen Anschlüsse des Multi-Energiemanagement-Gateways 1.

Das Multi-Energiemanagement-Gateway 1 kann einerseits beliebig viele weitere Kommunikations-Module 13, 18, 23, 28, 33 aufweisen, andererseits jedoch auch beliebig weniger als die fünf beispielhaft gezeigten Kommunikations-Module 13, 18, 23, 28, 33, entscheidend für die konkrete Anzahl an Kommunikations-Modulen ist die Frage, wie viele unterschiedliche Kommunikationskanäle erforderlich sind.

Die externen Anschlüsse des Multi-Energiemanagement-Gateway 1 sind wie folgt beschaltet:
- an den ersten Anschluss 5 des Base-Unit-Moduls 4 ist ein Energieversorgungsunternehmen 40 als externer Kommunikationsteilnehmer über einen externen Kommunikationskanal 59 - beispielsweise Internet - angeschlossen,
- an den ersten Anschluss 14 des ersten Kommunikations-Moduls 13 ist mindestens ein Gerät 43 als externer Kommunikationsteilnehmer - beispielsweise ein elektrischer Boiler / eine Heizungsanlage - über einen externen Kommunikationskanal 44 - beispielsweise ZigBee - angeschlossen,
- an den ersten Anschluss 19 des zweiten Kommunikations-Moduls 18 ist mindestens ein Gerät 46 als externer Kommunikationsteilnehmer - beispielsweise eine Klimaanlage - über einen externen Kommunikationskanal 47 - beispielsweise KNX-TP - angeschlossen,
- an den ersten Anschluss 24 des dritten Kommunikations-Moduls 23 ist mindestens ein Gerät 49 als externer Kommunikationsteilnehmer - beispielsweise eine Kühltruhe / ein Kühlschrank - über einen externen Kommunikationskanal 50 - beispielsweise Modbus - angeschlossen,
- an den ersten Anschluss 29 des vierten Kommunikations-Moduls 28 ist mindestens ein Gerät 52 als externer Kommunikationsteilnehmer - beispielsweise eine Geschirrspülmaschine - über einen externen Kommunikationskanal 53 - beispielsweise ZWave - angeschlossen,
- an den ersten Anschluss 34 des fünften Kommunikations-Moduls 33 ist mindestens ein Gerät 55 als externer Kommunikationsteilnehmer - beispielsweise eine Waschmaschine - über einen externen Kommunikationskanal 56-beispielsweise KNX-PL - angeschlossen.

Das Base-Unit-Modul 4 und die Kommunikations-Module 13, 18, 23, 28, 33 des Multi-Energiemanagement-Gateways 1 sind über ihre zweiten Anschlüsse 6, 15, 20, 25, 30, 35 mit einem Gateway-internen Kommunikationskanal 38 verbunden, beispielsweise über einen EEBUS.

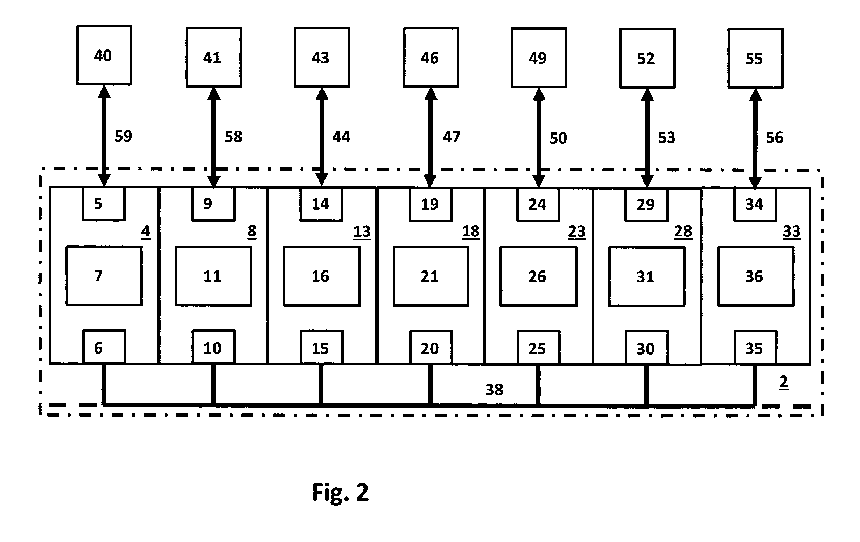

In Fig. 2 ist ein zweites Ausführungsbeispiel eines modularen Multi-Energiemanagement-Gateways mit zwei Base-Unit-Modulen und mit mehreren Kommunikations-Modulen dargestellt. Dabei wird die Anordnung nach Figur 1 durch ein weiteres Base-Unit-Modul 8 erweitert, welches einen ersten Anschluss 9, einen zweiten Anschluss 10 und eine interne Recheneinheit 11 besitzt. An den ersten Anschluss 9 des Base-Unit-Moduls 8 ist ein Webserver 41 als externer Kommunikationsteilnehmer über einen externen Kommunikationskanal 58 - beispielsweise Internet - angeschlossen. Das Base-Unit-Modul ist über seinen zweiten Anschluss 10 mit dem Gateway-internen Kommunikationskanal 38 verbunden. Die weitere Ausgestaltung des modularen Multi-Energiemanagement-Gateways 2 entspricht dem vorstehend erläuterten modularen Multi-Energiemanagement-Gateway 1.

Das vorgeschlagene modulare Multi-Energiemanagement-Gateway 1, 2 bietet dem Anwender eine große Flexibilität im Hinblick auf den privaten (Wohn-)Bereich betreffende unterschiedliche Kommunikationsprotokolle, d. h. die unterschiedlichen Arten der Kommunikationsprotokolle des privaten (Wohn-)Bereichs werden unterstützt. Die Anwendung eines bestimmten Kommunikationsprotokolls kann im Laufe der Zeit einem Wechsel unterliegen. Des Weiteren können in der Zukunft neue Kommunikationsprotokolle geschaffen werden. Das modulare Multi-Energiemanagement-Gateway 1, 2 ist offen für einen derartigen Wechsel der Kommunikationsprotokolle respektive unterstützt einen derartigen Wechsel.

Das Multi-Energiemanagement-Gateway 1, 2 basiert auf einem modularen Ansatz und beinhaltet mindestens ein Base-Unit-Modul 4, 8 - dem Kern-Baustein - und unterschiedliche Kommunikations-Module 13, 18, 23, 28, 33 im Sinne von Adaptern. Das Base-Unit-Modul 4, 8 deckt unter Einsatz seiner internen Recheneinheit die folgenden Funktionalitäten ab:
- Energiemanagement-Funktionen, wie die Überwachungen des Energieverbrauches und oder eines Lastabwurfes,
- Erfassen / Aufbereiten / Verarbeiten von Messdaten, welche von externen Kommunikationsteilnehmern stammen,
- Schnittstelle für Laststeuerungen eines Energieversorgungsunternehmens,
- Schnittstelle für einen Webserver, um Management-Konfigurationen und Visualisierung zu ermöglichen,
- Schnittstelle, um Software Updates der angeschlossenen Kommunikationsteilnehmer respektive Geräte 43, 46, 49, 52, 55 zu ermöglichen,
- Schnittstelle, um Konfigurationen der angeschlossenen Kommunikationsteilnehmer respektive Geräte 43, 46, 49, 52, 55 zu ermöglichen.

Die modularen Kommunikations-Module 13, 18, 23, 28, 33 steigern die Funktionalität des Base-Unit-Moduls 4, 8 durch die Unterstützung von unterschiedlichen Kommunikationsprotokollen, beispielsweise ZigBee, KNX, Modbus, ZWave, wobei die erwähnten internen Recheneinheiten jeweils eine Wandlung der unterschiedlichen Kommunikationsprotokolle durchführen. Der modulare Ansatz betreffend die Kommunikations-Module 13, 18, 23, 28, 33 / Base-Unit-Module 4, 8 erlaubt die physikalische Verbindung eines Moduls an der gewünschten Position innerhalb des modularen Multi-Energiemanagement-Gateways 1, 2. Dabei kann die Verbindung zwischen den einzelnen Moduln des Multi-Energiemanagement-Gateways 1, 2 auf unterschiedlichen physikalischen Implementationen basieren, beispielsweise auf Infrarot-Verbindungen, auf Drahtverbindungen oder auf Kontaktverbindungen. Desgleichen kann die Kommunikation zwischen den einzelnen Moduln prinzipiell auf einem beliebigen Kommunikationsprotokoll beruhen, beispielsweise auf IP, M-Bus, KNX. Nach erfolgter Auswahl eines gewünschten Kommunikationsprotokolls kommunizieren die Module selbstverständlich einheitlich auf Basis des konkret ausgewählten Kommunikationsprotokolls. Des Weiteren können die einzelnen Module entsprechend den Anforderungen und den ins Auge gefassten Kosten auf Kommunikationstechniken mit Nutzung unterschiedlicher Bandbreiten beruhen.

Der Aufbau des modularen Multi-Energiemanagement-Gateways 1, 2 kann abhängig vom jeweils konkreten Fall unterschiedlich gestaltet sein. Beispielsweise benötigt ein Anwender, welcher Geräte 43 als externe Kommunikationsteilnehmer mit einem Kommunikationsprotokoll gemäß ZigBee hat, mindestens ein Base-Unit-Modul 4 und mindestens ein ZigBee-Kommunikations-Modul 13. Falls zu einem späteren Zeitpunkt zusätzlich Geräte 46, 55 mit einem Kommunikationsprotokoll gemäß KNX oder irgend einem anderen Kommunikationsprotokoll vorzusehen sind, so kann das modulare Multi-Energiemanagement-Gateway 1, 2 problemlos mit weiteren Kommunikations-Modulen 18, 23, 28, 33 mit den jeweils gewünschten Kommunikationsprotokollen versehen werden. Des Weiteren können zu einem späteren Zeitpunkt bislang benutzte aber zukünftig nicht mehr erforderliche Kommunikations-Module vom modularen Multi-Energiemanagement-Gateway 1, 2 wieder entfernt werden, so dass das modulare Multi-Energiemanagement-Gateway 1, 2 stets nur aus den jeweils im konkreten Anwendungsfall erforderlichen Kommunikations-Modulen 13 und/oder 18 und/oder 23 und/oder 28 und/oder 33 zusammengesetzt ist.

Ganz allgemein ist es möglich, das modulare Multi-Energiemanagement-Gateway 1, 2 mit einer beliebigen Anzahl von Kommunikations-Modulen 13 und/oder 18 und/oder 23 und/oder 28 und/oder 33 zu versehen. Des Weiteren ist es möglich, eine beliebige Anzahl von Kommunikations-Modulen 13 und/oder 18 und/oder 23 und/oder 28 und/oder 33 eines bestimmten Kommunikationsprotokolls vorzusehen, beispielsweise mehr als ein KNX-Kommunikations-Modul 46, 55. Mit anderen Worten ist durch die Anzahl der Kommunikations-Module 13 und/oder 18 und/oder 23 und/oder 28 und/oder 33 eine Adaption an die Anzahl der konkret erforderlichen Kommunikationskanäle möglich.

Das modulare Multi-Energiemanagement-Gateway 1, 2 ermöglicht ein "hot-plug"-Zuschalten / Abschalten einzelner externer Kommunikationsteilnehmer, wie Geräte 43 und/oder 46 und/oder 49 und/oder 52 und/oder 55, d. h. der Austausch und/oder die Modifikation von Geräten 43 und/oder 46 und/oder 49 und/oder 52 und/oder 55 kann ohne jede System-Unterbrechungen und ohne ein Herunterfahren / Neustarten des Systems erfolgen.

Eine Skalierbarkeit eines das modulare Multi-Energiemanagement-Gateway 1 enthaltenden Systems wird durch Hinzufügen eines zweiten Base-Unit-Moduls 8 gesteigert, wie dies in Fig. 2 gezeigt ist. Dabei wird die Datenintegrität in einem solchen System durch Synchronisationsmechanismen zwischen jedem Base-Unit-Modul 4, 8 und dem System erzielt. Die Trennung von Daten wird mittels Rechteverwaltung im Base-Unit-Modul 4, 8 und zusätzlich durch physikalische Trennung infolge des Zufügens separater Base-Unit-Module 4, 8 ermöglicht. Ein Beispiel hierzu wäre das Vorsehen eines separaten Base-Unit-Moduls 4, 8 je Stockwerk eines Gebäudes.

Von großer Wichtigkeit ist die Gateway-Funktionalität des modulare Multi-Energiemanagement-Gateways respektive der Module, d. h. des mindestens einen Base-Unit-Moduls 4, 8 und der Kommunikations-Module 13, 18, 23, 28, 33. Nicht nur kann das Base-Unit-Modul 4, 8 mit jedem Kommunikationsmedium "sprechen" und dieses steuern, für welches ein entsprechendes Kommunikations-Modul 13, 18, 23, 28, 33 vorgesehen ist, sondern durch die Konfiguration mit dem Gateway-internen Kommunikationskanal 38 können Geräte 43, 46, 49, 52, 55 mit unterschiedlichen Kommunikationsmedien und Kommunikationsprotokollen zusätzlich auch untereinander kommunizieren. Diese medienübergreifende Funktion wird bislang mit Gateways realisiert, die mit den verschiedenen Kommunikationsmedien verbunden sind und durch eine interne Recheneinheit gesteuert werden. Beim erfindungsgemäß vorgeschlagenen modularen Multi-Energiemanagement-Gateway 1, 2 kann aufgrund des modularen Aufbaues mittels Anfügen benötigter Kommunikations-Module 13, 18, 23, 28, 33 ein genau die benötigten Medien unterstützendes und ständig erweiterbares / anpassbares Gateway realisiert werden, beispielsweise von KNX-TP nach ZigBee oder von KNX-PL nach Modbus usw.

Nach der Konfiguration der Geräte 43, 46, 49, 52, 55 mit Hilfe des mindestens einen Base-Unit-Moduls 4, 8 könnte letzteres sogar (theoretisch) entfernt werden, wenn die entsprechende Energie-Management-Funktion nicht benötigt wird. Ermöglicht wird dies durch ein übergeordnetes Kommunikationsprotokoll, mit dem die einzelnen Module untereinander kommunizieren, beispielsweise EEBUS.

Die mechanische Installation des mindestens einen Base-Unit-Moduls 4, 8 und der Kommunikations-Module 13, 18, 23, 28, 33 zur Bildung eines modularen Multi-Energiemanagement-Gateways 1, 2 kann beispielsweise durch Aufstecken / Aneinanderreihen auf Hutprofilschienen (DIN-Schienen) erfolgen.

### Bezugszeichenliste

- 1: Modulares Multi-Energiemanagement-Gateway
- 2: Modulares Multi-Energiemanagement-Gateway
- 3: -
- 4: Base-Unit-Modul
- 5: erster Anschluss
- 6: zweiter Anschluss
- 7: interne Recheneinheit
- 8: Base-Unit-Modul
- 9: erster Anschluss
- 10: zweiter Anschluss
- 11: interne Recheneinheit
- 12: -
- 13: Kommunikations-Modul
- 14: erster Anschluss
- 15: zweiter Anschluss
- 16: interne Recheneinheit
- 17: -
- 18: Kommunikations-Modul
- 19: erster Anschluss
- 20: zweiter Anschluss
- 21: interne Recheneinheit
- 22: -
- 23: Kommunikations-Modul
- 24: erster Anschluss
- 25: zweiter Anschluss
- 26: interne Recheneinheit
- 27: -
- 28: Kommunikations-Modul
- 29: erster Anschluss
- 30: zweiter Anschluss
- 31: interne Recheneinheit
- 32: -
- 33: Kommunikations-Modul
- 34: erster Anschluss
- 35: zweiter Anschluss
- 36: interne Recheneinheit
- 37: -
- 38: Gateway-interner Kommunikationskanal, beispielsweise EEBUS
- 39: -
- 40: Energieversorgungsunternehmen als externer Kommunikationsteilnehmer
- 41: Webserver als externer Kommunikationsteilnehmer
- 42: -
- 43: Gerät, beispielsweise elektrischer Boiler / Heizungsanlage, als externer Kommunikationsteilnehmer
- 44: externer Kommunikationskanal, beispielsweise ZigBee
- 45: -
- 46: Gerät, beispielsweise Klimaanlage, als externer Kommunikationsteilnehmer
- 47: externer Kommunikationskanal, beispielsweise KNX-TP
- 48: -
- 49: Gerät, beispielsweise Kühltruhe / Kühlschrank, als externer Kommunikationsteilnehmer
- 50: externer Kommunikationskanal, beispielsweise Modbus
- 51: -
- 52: Gerät, beispielsweise Geschirrspülmaschine, als externer Kommunikationsteilnehmer
- 53: externer Kommunikationskanal, beispielsweise ZWave
- 54: -
- 55: Gerät, beispielsweise Waschmaschine, als externer Kommunikationsteilnehmer
- 56: externer Kommunikationskanal, beispielsweise KNX-PL
- 57: -
- 58: externer Kommunikationskanal, beispielsweise Internet
- 59: externer Kommunikationskanal, beispielsweise Internet

## Patentansprüche

**1.** Modulares Multi-Energiemanagement-Gateway (1, 2), welches folgende Module umfasst
• mindestens ein Base-Unit-Modul (4), welches einen ersten Anschluss (5), einen zweiten Anschluss (6) und eine interne Recheneinheit (7) aufweist,
• mindestens zwei Kommunikationsmodule (13, 18, 23, 28, 33), welche jeweils einen ersten Anschluss (14, 19, 24, 29, 34), einen zweiten Anschluss (15, 20, 25, 30, 35) und eine zwischen beiden Anschlüssen angeordnete interne Recheneinheit (11, 16, 21, 26, 31, 36) aufweisen,
• wobei am ersten Anschluss (14, 19, 24, 29, 34) eines jeden Kommunikationsmoduls (13, 18, 23, 28, 33) und des mindestens einen Base-Unit-Moduls (4) ein externer Kommunikationskanal (44, 47, 50, 53, 56, 59) mit einem bestimmten Kommunikationsprotokoll zum Anschluss eines externen Kommunikationsteilnehmers (40, 41, 43, 46, 49, 52, 55) gebildet ist und
• wobei die Kommunikationsmodule (13, 18, 23, 28, 33) und das mindestens eine Base-Unit-Modul (4) über ihre zweiten Anschlüsse (6, 15, 20, 25, 30, 35) unter Verwendung eines Gateway-internen Kommunikationskanals mit einem übergeordnetem Kommunikationsprotokoll jeweils miteinander und untereinander kommunizieren, wodurch eine Kommunikation der externen Kommunikationsteilnehmer (40, 41, 43, 46, 49, 52, 55) untereinander / miteinander über das Multi-Energiemanagement-Gateway (1, 2) ermöglicht ist.

**2.** Modulares Multi-Energiemanagement-Gateway (1, 2) nach Anspruch 1, **dadurch gekennzeichnet, dass** das Base-Unit-Modul (4) unter Einsatz seiner internen Recheneinheit (7) Energiemanagement-Funktionen, eine mobile Endgeräteunterstützung, Web-Dienste und/oder ein Erfassen, Aufbereiten und Verarbeiten von Messdaten, welche von externen Kommunikationsteilnehmern stammen, abdeckt.

**3.** Modulares Multi-Energiemanagement-Gateway (1, 2) nach Anspruch 1 oder 2, **dadurch gekennzeichnet, dass** das Base-Unit-Modul (4) unter Einsatz seiner internen Recheneinheit (7) wenigstens eine Schnittstelle für Laststeuerungen eines Energieversorgungsunternehmens, wenigstens eine Schnittstelle für einen Webserver, wenigstens eine Schnittstelle für Software Updates der angeschlossenen Kommunikationsteilnehmer respektive Geräte (43, 46, 49, 52, 55), und/oder wenigstens eine Schnittstelle für eine Konfigurationen der angeschlossenen Kommunikationsteilnehmer respektive Geräte (43, 46, 49, 52, 55), bereitstellt.

**4.** Modulares Multi-Energiemanagement-Gateway (1, 2) nach einem der Ansprüche 1 bis 3 **gekennzeichnet durch** eine Erweiterung mit einem zweiten Base-Unit-Modul (8), welches einen ersten Anschluss (9), einen zweiten Anschluss (10) und eine interne Recheneinheit (11) aufweist.

**5.** Modulares Multi-Energiemanagement-Gateway (1, 2) nach einem der vorherigen Ansprüche, **gekennzeichnet durch** einen Gateway-internen Kommunikationskanal mit übergeordnetem Kommunikationsprotokoll in Form von EEBUS.

**6.** Modulares Multi-Energiemanagement-Gateway (1, 2) nach einem der Ansprüche 1 bis 4, **gekennzeichnet durch** einen externer Kommunikationskanal (44, 47, 50, 53, 56) in Form von ZigBee.

**7.** Modulares Multi-Energiemanagement-Gateway (1, 2) nach einem der Ansprüche 1 bis 4, **gekennzeichnet durch** einen externer Kommunikationskanal (44, 47, 50, 53, 56) in Form von KNX-TP.

**8.** Modulares Multi-Energiemanagement-Gateway (1, 2) nach einem der Ansprüche 1 bis 4, **gekennzeichnet durch** einen externer Kommunikationskanal (44, 47, 50, 53, 56) in Form von Modbus.

**7.** Modulares Multi-Energiemanagement-Gateway (1, 2) nach einem der Ansprüche 1 bis 4, **gekennzeichnet durch** einen externer Kommunikationskanal (44, 47, 50, 53, 56) in Form von ZWave.

**9.** Modulares Multi-Energiemanagement-Gateway (1, 2) nach einem der Ansprüche 1 bis 4, **gekennzeichnet durch** einen externer Kommunikationskanal (44, 47, 50, 53, 56) in Form von KNX-PL.

**10.** Modulares Multi-Energiemanagement-Gateway (1, 2) nach einem der Ansprüche 1 bis 4, **gekennzeichnet durch** einen externer Kommunikationskanal (44, 47, 50, 53, 56) in Form des Internet.

**11.** System mit modularem Multi-Energiemanagement-Gateway nach einem der Ansprüche 1 bis 10 **dadurch gekennzeichnet, dass** die einzelnen Kommunikationsmodule (13, 18, 23, 28, 33) in Zusammenspiel mit der Basiseinheit in beliebiger Art und Weise so miteinander verbindbar sind, dass weitere Kommunikationsprotokolle und weitere Systeme mit jeweils einem weiteren Modul oder mehreren Modulen in das System einbindbar sind.
